# EUROPÄISCHE PATENTSCHRIFT

(11) **EP 1 748 279 B1**
(45) Veröffentlichungstag und Bekanntmachung des Hinweises auf die Patenterteilung: **14.11.2007**
(21) Anmeldenummer: 05014314.8
(22) Anmeldetag: 01.07.2005
(51) Int. Cl.: G01C 11/00, B07C 3/08, G06Q 10/00

(54) **Verfahren zum Erfassen einer Markierung auf einer laufenden Warenbahn**
System for detection of marking on a moving product web
Système pour détecter le marquage d'une nappe en mouvement

(43) Veröffentlichungstag der Anmeldung: 31.01.2007
(73) Patentinhaber: Texmag GmbH Vertriebsgesellschaft, 8800 Thalwil (CH)
(72) Erfinder: Wittmann, Andrea, 86167 Augsburg (DE); Eisen, Jürgen, 86199 Augsburg (DE); Zeh, Martin, 86485 Biberbach (DE); Schild, Dominik, 86420 Diedorf-Lettenbach (DE); Sander, Peter, 86836 Graben (DE)
(74) Vertreter: Witzany, Manfred

(56) Entgegenhaltungen:
- US-A- 3 708 655
- US-A1- 2001 042 847
- US-A1- 2004 089 482

## Beschreibung

Aus der DE 501 04 266.0 und der US 2001/0042847 ist ein Verfahren zum Erfassen einer Markierung einer laufenden Warenbahn bekannt. Bei diesem Verfahren wird eine Markierung der Warenbahn laufend optisch erfaßt und ein entsprechendes Lagesignal der Markierung erzeugt. Dieses Verfahren funktioniert ausgezeichnet, wenn die Markierung durchgängig auf der Warenbahn vorgesehen ist. Außerdem sollten im Sichtfeld des optischen Sensors keine weiteren optisch erkennbaren Merkmale vorhanden sein, die fälschlicherweise als Markierung aufgefaßt werden könnten. Anderenfalls würde bei diesem bekannten Verfahren ein falscher Lagewert gemessen und ausgegeben werden.

Der Erfindung liegt die Aufgabe zugrunde, ein Verfahren der eingangs genannten Art zu schaffen, welches auch bei nicht durchgängiger Markierung einer Warenbahn bzw. bei Vorhandensein mehrerer Markierungen zuverlässig arbeitet. Diese Aufgabe wird neuerungsgemäß mit den Merkmalen der Patentansprüche 1 bzw. 2 gelöst.

Bei dem Verfahren gemäß Anspruch 1 zum Erfassen einer Markierung einer laufenden Warenbahn wird die Warenbahn mittels mindestens einer Bildaufnahmevorrichtung optisch abgetastet. Die Abtastung kann dabei berührungslos erfolgen, so daß der Bahnlauf hierdurch in keiner Weise behindert wird. Als Bildaufnahmevorrichtung hat sich insbesondere eine CCD-Kamera bewährt, wobei grundsätzlich eine quer zur Bahnlaufrichtung ausgerichtete Zeilenkamera ausreichen würde. Alternativ kann jedoch auch eine Matrixkamera eingesetzt werden. Je nachdem, wie die Markierung auf der Warenbahn vorgesehen ist, kann in einfachen Fällen der Einsatz einer Schwarz-Weiß-Kamera ausreichen, sofern hierdurch ein ausreichender Kontrast gewährleistet ist. In schwierigen Fällen ist jedoch der Einsatz einer Farbkamera vorzuziehen, so daß auch Markierungen, die sich im Schwarz-Weiß-Bild nicht durch einen ausreichenden Kontrast abzeichnen, erfaßbar sind. Die Markierung selbst kann beispielsweise auf die Warenbahn aufgedruckt sein. Alternativ ist es jedoch auch vorstellbar, daß die Markierung in eine textile Warenbahn eingewebt oder aufgenäht ist. Sie könnte von einem fehlenden Faden im Textilgewebe oder von einem Stauchfalz in einem Karton oder Verbundwerkstoff gebildet sein. In den letztgenannten Fällen ergibt die Markierung zwar keinen sichtbaren Kontrast an der Warenbahnoberfläche, bei schräger Beleuchtung ergibt sich jedoch eine charakteristische Hell-Dunkel-Kante, die optisch auswertbar ist. Auf diese Weise lassen sich unterschiedlichste Markierungen der laufenden Warenbahn erfassen. Insbesondere bei eingewebten bzw. eingefalzten Markierungen besteht ein großer Anwendungsbedarf, da auf diese Weise eine mustergerechte Markierungserkennung der Warenbahn möglich ist. So ist es beispielsweise mit diesem Verfahren möglich, eine Textilbahn in ihrer Lage zu erfassen und damit zu führen, wobei das Führungskriterium ein auf die Textilbahn aufgedrucktes oder in diese eingewebtes Muster ist. Alternativ könnte eine Bahn auch direkt nach einer vorher aufgebrachten Falzkante geführt werden. Bei diesen Führungskriterien werden direkt die in der Warenbahn vorhandenen Markierungen genutzt, so daß ein zusätzliches Anbringen einer eigenen Markierung als Führungskriterium entfallen kann. Damit entfällt auch die Notwendigkeit, die zusätzlich angebrachte Markierung korrekt auf die eigentlichen Führungskriterien auszurichten. Auf diese Weise kann beispielsweise eine gefalzte Kartonbahn exakt zu den Falzlinien in vorgegebenem Abstand geschnitten oder falzgenau einer Kartonagemaschine zugeführt werden. Problematisch an diesen Führungskriterien ist jedoch, daß sie in der Regel nicht immer bzw. nicht immer an der richtigen Lage zur Verfügung stehen. So sind Muster in Warenbahnen oft unterbrochen bzw. treten über die Warenbahn verteilt mehrfach auf. Falzlinien in Kartonagen verlaufen nicht geradlinig in Warenbahnlaufrichtung sondern sie besitzen vielmehr einen recht komplexen Verlauf, so daß ein direktes Heranziehen dieser Merkmale als Führungskriterium zu falschen und damit unbrauchbaren Meßergebnissen führen würde. Würden diese Meßergebnisse direkt einer Bahnlaufregelung zugeführt werden, so ergäbe sich ein chaotisches Regelverhalten. Zur Vermeidung dieser Probleme schlägt der Patentanspruch 1 vor, aus den ermittelten Lagewerten der Markierung durch Anwendung einer lageabhängigen Gewichtungsfunktion ein Gültigkeitssignal zu erzeugen. Dieses Gültigkeitssignal zeigt an, ob der aktuell ermittelte Lagewert gültig ist. Im Falle einer nachgeordneten Bahnlaufregelung kann dieses Gültigkeitssignal dazu herangezogen werden, die gesamte Bahnlaufregelung zu verblocken, so lange das Gültigkeitssignal die Ungültigkeit des ausgegebenen Lagewertes anzeigt. Dies führt dazu, daß die nachfolgende Bahnlaufregelung die eingehenden Meßwerte vollständig ignoriert und die Stellglieder in ihrer Lage beläßt. Die lageabhängige Gewichtungsfunktion wirkt dabei wie ein Filter für die ermittelten Lagewerte, durch das unbrauchbare Lagewerte erkannt und ausgesondert werden. Auf diese Weise ist es beispielsweise möglich, nur den äußerst linken Streifen einer mit Streifen bedruckten Warenbahn als Führungskriterium heranzuziehen. Fällt dieser Streifen musterbedingt aus, so wird zwar der Lagewert des rechts folgenden Streifens als aktueller Lagewert gemessen, durch das eingebaute Filter wird dieser Lagewert jedoch als ungültig markiert, um die auf diese Weise erfolgte Fehlinterpretation der erfaßten Werte zu vermeiden. Auch wenn der Erfindungsgegenstand anhand einer Bahnlaufregelung erläutert wird, so ist dies nicht einschränkend zu verstehen. Vielmehr kann das erfindungsgemäße Verfahren auch im Rahmen anderer Anwendungsfälle eingesetzt werden. Lediglich als Beispiele seien die direkte Qualitätsüberwachung der Warenbahn ohne jegliche Regelfunktion bzw. die Detektion des Bahnrapports genannt.

Bei dem Verfahren gemäß Anspruch 2 werden die ermittelten Lagewerte einem Filter zugeführt, das seinen Ausgabewert für die Lage der Markierung berechnet. Dieses Filter ermittelt dabei aus den Lagewerten verschiedener Meßzyklen unter Anwendung einer zeit- und lageabhängigen Gewichtungsfunktion den Ausgabewert. Die Zeitabhängigkeit der Gewichtungsfunktion ist vorzugsweise eine für zurückliegende Zeiten abfallende Exponentialfunktion, die aktuelle Meßwerte stärker berücksichtigt als zeitlich weit zurückliegende. Da die Warenbahn bewegt wird, kann diese Zeitabhängigkeit auch als Ortsabhängigkeit in Bahnlaufrichtung aufgefaßt werden. Die Lageabhängigkeit der Gewichtungsfunktion berücksichtigt die Gültigkeitsbewertung, so daß gültige Lagewerte entsprechend stärker berücksichtigt werden als ungültige. Im einfachsten Fall ist der ausgegebene Wert, den das Filter erzeugt, der letzte Lagewert, der das Gültigkeitskriterium der Gewichtungsfunktion erfüllt hat. Alternativ kann das Filter auch eine entsprechende Tiefpaßwirkung und gleitende Gültigkeitsabhängigkeit der Meßwerte realisieren.

Gemäß Anspruch 3 ist es günstig, wenn die Gewichtungsfunktion eine Peakfunktion ist. Als Beispiele für eine derartige Peakfunktion kommen eine Gaußfunktion, eine Lorentzfunktion, eine Fensterfunktion, eine Besselfunktion usw. in Betracht. Welche konkrete Peakfunktion angewendet werden soll, hängt vom jeweiligen Einzelfall ab. Wichtig ist, daß die Peakfunktion wenigstens zwei Parameter aufweist, nämlich die Lage des Peaks und die charakteristische Linienbreite. Die charakteristische Linienbreite wird in der Regel als Parameter voreingestellt und hängt im wesentlichen von der Art der Warenbahn ab. Kommen störende Lagewerte nur in größerer Entfernung des korrekten Werts vor, so kann die Linienbreite relativ großzügig dimensioniert werden. Die Erfassung der Markierung wird dadurch sehr unempfindlich gegenüber Störungen. Falls dagegen fehlerhafte Lagewerte auch relativ nahe beim Warenwert liegen können, muß die Linienbreite entsprechend schmal gewählt werden. Nur auf diese Weise ist es möglich, eine ausreichende Anzahl von Fehlmessungen durch ein entsprechendes Ungültigkeitssignal oder Filterung aus dem ausgegebenen Datenstrom zu eliminieren. Verbleibt im ausgegebenen Datenstrom nur noch eine verschwindend geringe Menge an Fehlmessungen, so ergibt sich eine ausreichend geringe Störwirkung, so daß eine zuverlässige Erfassung der Markierung über eine Mittelwertbildung möglich ist. Andererseits birgt eine geringe Linienbreite immer die Gefahr in sich, daß bei einer plötzlichen Verlagerung der Warenbahn gültige Lagewerte nicht mehr dedektierbar sind.

Eine einfache und in der Praxis bewährte Gewichtungsfunktion ist gemäß Anspruch 4 eine Fensterfunktion. Diese hat sich insbesondere in jenen Fällen bewährt, in denen ungültige Meßwerte durch ein inaktives Gültigkeitssignal ausgeblendet werden sollen. Für das Gültigkeitssignal gibt es nur zwei mögliche Zustände, nämlich gültig und ungültig, so daß eine Fensterfunktion völlig ausreichend ist. Die Fensterfunktion ordnet allen Lagenwerten innerhalb eines vorgegebenen Fensters ein aktives Gültigkeitssignal und allen Lagewerten außerhalb des Fensters ein inaktives Gültigkeitssignal zu.

Während die Linienbreite der Peakfunktion unter Zuhilfenahme verschiedenster Annahmen sinnvoll als Prozeßparameter eingestellt werden kann, ist dies bei der Peakposition der Gewichtungsfunktion nicht möglich. An welcher konkreten Stelle ein gültiger Lagewert auftreten wird, hängt vielmehr vom aktuellen Bahnlauf ab. Um diesen Parameter zu ermitteln, ist es gemäß Anspruch 5 vorteilhaft, wenn die Gewichtungsfunktion von den Lagewerten zurückliegender Meßzyklen beeinflußt wird. Die zurückliegenden Meßzyklen ergeben eine Übersicht über verschiedene mögliche, real auftretende Lagewerte, aus der unmittelbar durch Anwendung entsprechender mathematischer Operationen der korrekte Lagewert ermittelt werden kann. Diese Übersicht ist bei alleinigem Betrachten des aktuellen Lagewerts nicht gegeben. Es reicht daher aus, auf die Lagewerte zurückliegender Meßzyklen ein entsprechendes Auswahlkriterium anzuwenden, welches applikationsabhängig ist. Zur Erfassung der Markierung ist demnach immer eine gewisse Anzahl an Meßzyklen erforderlich, ehe ein Meßwert ausgegeben werden kann. Diese Meßzyklen werden vorzugsweise beim Anlaufen der Warenbahn gewonnen. Lediglich als Beispiel könnte ein derartiges Auswahlkriterium lauten, den Gültigkeitsbereich der Lagewerte auf eine Umgebung um die äußerst links gefunden Lagewerte zu beschränken. Selbstverständlich sind jedoch auch komplexere Auswahlkriterien möglich.

Um für eine möglichst breite Anwendungsvielfalt entsprechende Auswahlkriterien bearbeiten zu können, ist es gemäß Anspruch 6 günstig, wenn die Gewichtungsfunktion von einer statistischen Auswertung der Lagewerte zurückliegender Meßzyklen beeinflußt wird. Die Lagewerte zurückliegender Meßzyklen werden dabei in Art eines Histogramms erfaßt, um die Häufigkeitsverteilung zu ermitteln. Auf diese Weise können Kriterien wie die Detektion des äußerst rechten Häufungspunktes mit mindestens 10 % der Meßwerte oder ähnlich komplexe Abfragen berücksichtigt werden. Die sogenannten Ausreißer, die an extremer Stelle in der statistischen Auswertung zu finden sind, können auf diese Weise einfach unterdrückt werden.

Damit die Erfassung der Markierung auch problemlos bei sich verlagernder Warenbahn funktioniert, wird die Häufigkeitsverteilung der Lagewerte gemäß Anspruch 7 gleitend ermittelt. Damit wird die Häufigkeitsverteilung der Lagewerte ständig aktualisiert und die ältesten Lagewerte aus der Statistik eliminiert. Bei einer sich allmählich verlagernden Warenbahn wird demnach der Peak der Gewichtungsfunktion mit der sich verlagernden Warenbahn mitgeführt, so daß die Auswertung der Lagewerte stets möglich bleibt. Zwar hinkt die Häufigkeitsverteilung zeitlich immer etwas hinter den aktuellen Lagewerten hinterher, dies kann bei moderaten Verlägerungsgeschwindigkeiten der Warenbahn jedoch problemlos durch Wahl einer hinreichenden Linienbreite der Peakfunktion ausgeglichen werden. Auf die gleitend ermittelte Häufigkeitsverteilung der Lagewerte wird kontinuierlich ein Gültigkeitskriterium angewendet, um die mittlere Lage gültiger Lagewerte zu bestimmen. Dieses Gültigkeitskriterium beeinflußt direkt die Gewichtungsfunktion, insbesondere die Peakfunktion.

Bei einfachen Gültigkeitskriterien genügt es oft, wenn die Häufigkeitsverteilung direkt mit einer lageabhängigen Funktion multipliziert wird, um die verschiedenen Häufungspunkte unterschiedlich zu gewichten. Die Produktfunktion kann dann bezüglich der Lage ihres Maximums ausgewertet werden, die direkt die Gewichtungsfunktion, insbesondere die Lage des Peaks beeinflußt. Kommen beispielsweise musterbedingt nur wenige Lagen bis auf einzelne Ausreißer besonders häufig vor, so kann die Häufigkeitsverteilung beispielsweise mit einer linearen Funktion multipliziert werden, um den äußerst linken oder äußerst rechten Häufungspunkt zu bevorzugen. Dieser bevorzugte Häufungspunkt ist dann das absolute Maximum der Produktfunktion und kann bezüglich seiner Lage direkt als Gültigkeitskriterium herangezogen werden.

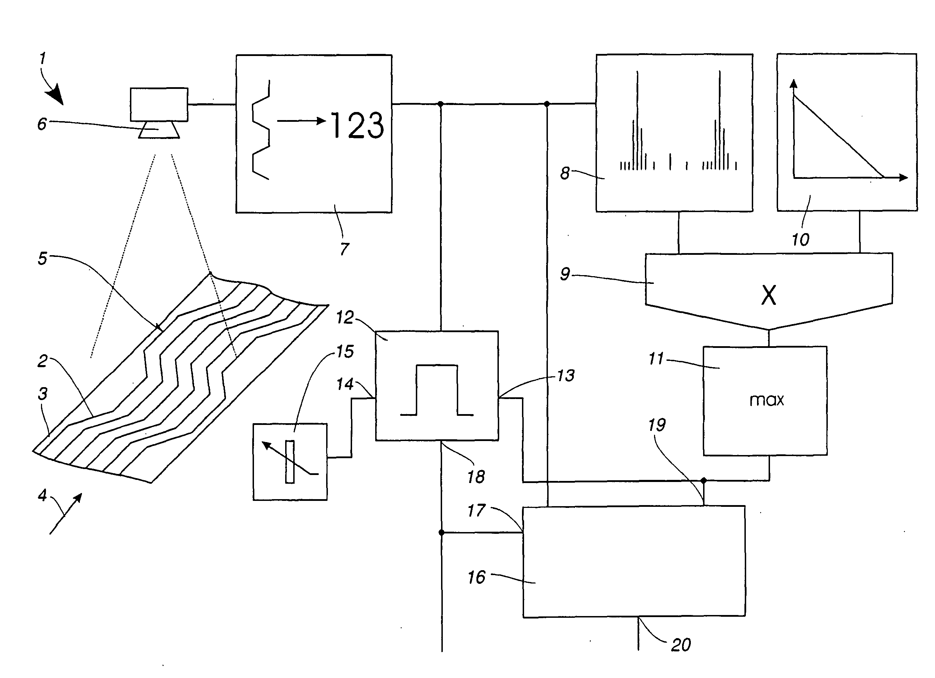

Der Erfindungsgegenstand wird beispielhaft anhand der Zeichnung erläutert, ohne den Schutzumfang zu beschränken.

Die einzige Figur zeigt eine schematische Darstellung einer Vorrichtung 1 zum Erfassen einer Markierung 2 auf einer laufenden Warenbahn 3. Im gezeigten Ausführungsbeispiel ist die Markierung 2 auf die Warenbahn 3 aufgedruckt. Die Markierung 2 ist dabei das auf der Warenbahn 3 vorhandene Muster und sie verläuft nicht geradlinig. Die Markierung 2 verläuft vielmehr abschnittsweise in Bahnlaufrichtung 4 und abschnittsweise schräg dazu. Eine nicht dargestellte Bahnlaufregelung soll von dieser Markierung 2 beeinflußt sein, wobei das Führungskriterium die äußerst linke Markierung in jenen Abschnitten 5 ist, in denen sich die Markierung 2 äußerst links befindet. Selbstverständlich können auch andere Kriterien herangezogen werden.

Zur optischen Erfassung der Warenbahn 3 ist eine Bildaufnahmevorrichtung 6 in Form einer CCD-Kamera vorgesehen. Diese Bildaufnahmevorrichtung 6 erzeugt Bildsignale, in denen die Information der Markierung 2 enthalten ist. Diese Bildsignale werden einer Bildverarbeitungsvorrichtung 7 zugeführt, die aus den gewonnenen Bildsignalen ein Lagesignal für die Markierung 2 erzeugt. Die Verarbeitungsvorrichtung 7 verwendet hierzu einen üblichen Kantensuchalgorithmus, der die Lagen von Kanten innerhalb des Bildsignals detektiert.

Die bei jedem Meßzyklus gewonnenen Lagesignale werden einem Datensampler 8 zugeführt, der eine statistische Auswertung der erhaltenen Lagesignale durchführt. Diese statistische Auswertung sieht vor, daß die Häufigkeit des Auftretens verschiedener Lagesignale histogrammartig erfaßt wird und eine Häufigkeitsverteilungsfunktion an einen Multiplizierer 9 ausgegeben wird. Der Multiplizierer 9 bildet das Produkt des vom Datensampler 8 erstellten Histogramms mit einem Ausgangssignal eines Funktionsgenerators 10, der im wesentlichen eine lineare Funktion generiert. Die Ausgangsfunktion des Funktionsgenerators 10 bildet dabei eine Gewichtung des Histogramms, das der Datensampler 8 erzeugt. Durch den Multiplikationsvorgang des Multiplizierers 9 wird der linke Häufungspunkt gegenüber dem rechten bevorzugt, so daß die vom Multiplizierer 9 generierte Ausgangsfunktion ein eindeutiges Maximum aufweist. Dieses Maximum wird mit einem Maximumdetektor 11 ermittelt und die Position des absoluten Maximums des gewichteten Histogramms ermittelt. Dieser vom Maximumdetektor 11 erzeugte Lagewert entspricht der Solllage der auszuwertenden Markierung 2.

Das von der Bildverarbeitungsvorrichtung 7 generierte Lagesignal wird außerdem einem Fensterkomperator 12 zugeführt, der prüft, ob das Lagesignal innerhalb des vordefinierten Fensterbereichs liegt. Der Fensterkomperator 12 hat einen Positionseingang 13, der die Mittenlage des Fensters definiert. Dieser Positionseingang 13 ist mit dem Ausgang des Maximumdetektors 11 verbunden. Außerdem besitzt der Fensterkomperator 12 einen Fensterbreiten-Eingang 14, der die Breite des Fensters bestimmt. Dieser Fensterbreiten-Eingang 14 ist mit einem Wertgeber 15 verbunden, der einen vordefinierten Wert für die Fensterbreite des Fensterkomperators 12 vorgibt. Dieser Wert ist in der Regel verstellbar.

Das Lagesignal der Bildverarbeitungsvorrichtung 7 ist außerdem mit einem Filter 16 verbunden, welches eine Tiefpaßwirkung besitzt. Das Filter 16 besitzt außerdem einen Gültigkeitseingang 17, der mit einem Ausgang 18 des Fensterkomperators 12 verbunden ist. Das Filter 16 ist dabei so aufgebaut, daß es nur dann neue Lagesignale an seinem Eingang 19 entgegennimmt, wenn ein positives Gültigkeitssignal am Gültigkeitseingang 17 anliegt. Damit werden Lagesignale der Bildverarbeitungsvorrichtung 7, die nicht dem voreingestellten Kriterium entsprechen, durch das Filter 16 unterdrückt. Ein Ausgang 20 des Filters 16 gibt ein Signal ab, das im wesentlichen dem Lagesignal der Verarbeitungsvorrichtung 7 folgt, sofern ein positives Gültigkeitssignal am Gültigkeitseingang 17 anliegt. Falls dagegen am Gültigkeitseingang 17 angezeigt wird, daß die aktuellen Meßwerte ungültig sind, so hält das Filter 16 an seinem Ausgang 20 den letzten Ausgabewert konstant. Auf diese Weise wird verhindert, daß Lagesignale, die von Bereichen der Markierung 2 außerhalb des Abschnitts 5 liegen bzw. von anderen Markierungen stammen, nicht an den Filterausgang 20 abgegeben werden. Zusätzlich wird das Gültigkeitssignal am Gültigkeitsausgang 18 ausgegeben, welches anzeigt, ob gegenwärtig gültige Lagesignale erzielt werden. Dieses Gültigkeitssignal kann beispielsweise dazu dienen, einer nachfolgenden Regelung anzuzeigen, daß die aktuellen Signale nicht verwertbar sind und die Regelung verblockt werden soll.

### Bezugszeichenliste

- 1: Vorrichtung
- 2: Markierung
- 3: Warenbahn
- 4: Bahnlaufrichtung
- 5: gültiger Abschnitt
- 6: Bildaufnahmevorrichtung
- 7: Bildverarbeitungsvorrichtung
- 8: Datensampler
- 9: Multiplizierer
- 10: Funktionsgenerator
- 11: Maximumdetektor
- 12: Fensterkomperator
- 13: Positionseingang
- 14: Fensterbreiten-Eingang
- 15: Wertgeber
- 16: Filter
- 17: Gültigkeitseingang
- 18: Gültigkeitsausgang
- 19: Filtereingang
- 20: Filterausgang

## Patentansprüche

1. Verfahren zum Erfassen einer Markierung (2) einer laufenden Warenbahn (3), bei dem die Warenbahn (3) mittels mindestens einer Bildaufnahmevorrichtung (6) optisch abgetastet wird, die in aufeinanderfolgenden Meßzyklen Bildsignale erzeugt, welche einer Bildverarbeitungsvorrichtung (7) zugeführt werden, die aus den Bildsignalen die Lage der Markierung (2) ermittelt und Lagewerte ausgibt, **dadurch gekennzeichnet, daß** aus den Lagewerten durch Anwendung einer lageabhängigen Gewichtungsfunktion ein Gültigkeitssignal erzeugt und ausgegeben wird, welches anzeigt, ob der aktuell ermittelte Lagewert gültig ist.

2. Verfahren nach Anspruch 1 oder nach dem Oberbegriff des Anspruchs 1, **dadurch gekennzeichnet, daß** die Lagewerte einem Filter (16) zugeführt werden, welches aus den Lagewerten verschiedener Meßzyklen und Anwendung einer zeit- und lage-abhängigen Gewichtungsfunktion einen Ausgabewert für die Lage der Markierung (2) berechnet.

3. Verfahren nach Anspruch 1 oder 2, **dadurch gekennzeichnet, daß** die Gewichtungsfunktion eine Peakfunktion ist.

4. Verfahren nach Anspruch 3, **dadurch gekennzeichnet, daß** die Gewichtungsfunktion eine Fensterfunktion ist.

5. Verfahren nach mindestens einem der Ansprüche 1 bis 4, **dadurch gekennzeichnet, daß** die Gewichtungsfunktion von den Lagewerten zurückliegender Meßzyklen beeinflußt wird.

6. Verfahren nach Anspruch 5, **dadurch gekennzeichnet, daß** die Gewichtungsfunktion von einer statistischen Auswertung der Lagewerte zurückliegender Meßzyklen beeinflußt wird.

7. Verfahren nach mindestens einem der Ansprüche 1 bis 6, **dadurch gekennzeichnet, daß** die Häufigkeitsverteilung von Lagewerten gleitend ermittelt wird, auf die ein Gültigkeitskriterium angewendet wird, um die mittlere Lage der gültigen Lagewerte zu bestimmen, die die Gewichtungsfunktion beeinflußt.

8. Verfahren nach Anspruch 7, **dadurch gekennzeichnet, daß** die Häufigkeitsverteilung von Lagewerten mit einer lageabhängigen Funktion multipliziert und die Lage des Maximums der Produktfunktion die Gewichtungsfunktion beeinflußt.

## Claims

1. Method for sensing a marking (2) of a running web of material (3), in which the web of material (3) is optically scanned by means of at least one image recording device (6), which in successive measuring cycles generates image signals which are fed to an image processing device (7), which determines the position of the marking (2) from the image signals and outputs positional values, **characterized in that** a validity signal which indicates whether the currently determined positional value is valid is generated from the positional values by applying a position-dependent weighting function and is output.

2. Method according to Claim 1 or according to the precharacterizing clause of Claim 1, **characterized in that** the positional values are fed to a filter (16), which calculates an output value for the position of the marking (2) from the positional values of various measuring cycles and by applying a time- and position-dependent weighting function.

3. Method according to Claim 1 or 2, **characterized in that** the weighting function is a peak function.

4. Method according to Claim 3, **characterized in that** the weighting function is a window function.

5. Method according to at least one of Claims 1 to 4, **characterized in that** the weighting function is influenced by the positional values of past measuring cycles.

6. Method according to Claim 5, **characterized in that** the weighting function is influenced by a statistical evaluation of the positional values of past measuring cycles.

7. Method according to at least one of Claims 1 to 6, **characterized in that** the frequency distribution of positional values is determined in a sliding manner, to which distribution a validity criterion is applied in order to determine the mean position of the valid positional values which influence the weighting function.

8. Method according to Claim 7, **characterized in that** the frequency distribution of positional values is multiplied by a position-dependent function and the position of the maximum of the product function influences the weighting function.

## Revendications

1. Système pour détecter le marquage (2) d'une nappe (3) en mouvement dans lequel la nappe (3) est scrutée optiquement au moyen d'au moins un dispositif d'enregistrement d'images (6) qui, lors des cycles de mesure successifs, génère des signaux d'images qui sont acheminés vers un dispositif de traitement d'images (7) qui à partir des signaux d'images, détermine la position du marquage (2) et fournit des valeurs de position, **caractérisé en ce qu'**à partir des valeurs de position, en appliquant une fonction de pondération dépendant de la position, on génère et on fournit un signal de validité qui indique si la valeur courante de position déterminée est valable.

2. Système selon la revendication 1 ou selon le préambule de la revendication 1, **caractérisé en ce que** les valeurs de position sont acheminées vers un filtre (16) qui à partir des valeurs de position de différents cycles de mesure et en appliquant une fonction de pondération qui dépend du temps et de la position, calcule une valeur de sortie pour la position du marquage (2).

3. Système selon la revendication 1 ou 2, **caractérisé en ce que** la fonction de pondération est une fonction à pic.

4. Système selon la revendication 3, **caractérisé en ce que** la fonction de pondération est une fonction fenêtre.

5. Système selon au moins une des revendications 1 à 4, **caractérisé en ce que** la fonction de pondération est influencée par les valeurs de position des cycles de mesure antérieurs.

6. Système selon la revendication 5, **caractérisé en ce que** la fonction de pondération est influencée par un traitement statistique des valeurs de position des cycles de mesure antérieurs.

7. Système selon au moins une des revendications 1 à 6, **caractérisé en ce que** la distribution des fréquences des valeurs de position est déterminée par glissement, auxquelles on applique un critère de validité pour déterminer la position moyenne des valeurs de position valables qui influence la fonction de pondération.

8. Système selon la revendication 7, **caractérisé en ce que** la distribution des fréquences des valeurs de position est multipliée par une fonction dépendant de la position et que la position du maximum de la fonction produit influence la fonction de pondération.
